# EUROPÄISCHE PATENTSCHRIFT

(11) **EP 1 607 372 B1**
(45) Veröffentlichungstag und Bekanntmachung des Hinweises auf die Patenterteilung: **04.07.2007**
(21) Anmeldenummer: 05009649.4
(22) Anmeldetag: 03.05.2005
(51) Int. Cl.: C01C 1/08, F01N 3/20, B01D 53/94, B65G 65/48, B65G 65/42

(54) **Zuführvorrichtung zum Zuführen von festen Harnstoffgranulatkörnern in einen innerhalb oder ausserhalb einer Abgasleitung angeordneten Ammoniakgenerator**
Device for feeding solid urea prills to an ammoniagenearator aranged inside or outside an exhaust line
Dispositif d'alimentation de granules d'uree dans un generateur d'ammoniac situe intérieur ou extérieur d'une ligne des gaz de combustion

(30) Priorität: 17.06.2004 DE 102004029387
(43) Veröffentlichungstag der Anmeldung: 21.12.2005
(73) Patentinhaber: MAN Nutzfahrzeuge Aktiengesellschaft, 80995 München (DE); Bertiller, Roland, 72459 Albstadt (DE); Bertiller, Marco, 72459 Albstadt (DE)
(72) Erfinder: Bertiller, Roland, 72459 Albstadt (DE); Bertiller, Marco, 72459 Albstadt (DE); Jacob, Eberhard, Dr., 82152 Krailing (DE)

(56) Entgegenhaltungen:
- EP-A- 1 338 562
- DE-A1- 10 252 734
- DE-C1- 19 504 992
- US-A- 5 584 265

## Beschreibung

Die Erfindung betrifft eine Zuführvorrichtung zum Zuführen von festen Harnstoffgranulatkörnern in einen innerhalb oder außerhalb einer Abgasleitung angeordneten Ammoniakgenerator mit Merkmalen gemäß dem Oberbegriff des Anspruchs 1.

Es ist bekannt, die Abgase von Dieselmotoren mittels selektiver katalytischer Reduktion (SCR) zur NOₓ-Verminderung zu behandeln. Als Reduktionsmittel für diesen Reinigungsprozesses wird Ammoniak verwendet, der auf verschiedene Art und Weise innerhalb oder außerhalb einer Abgasleitung erzeugbar ist. Ausgangsmaterial hierfür kann fester Harnstoff oder eine Harnstoffwasserlösung sein.

Eine Zuführvorrichtung zum Zuführen von festen Harnstoffgranulatkörner in einen außerhalb einer Abgasleitung angeordneten Ammoniakgenerator ist der EP 1 338 562 A zu entnehmen.

Die EP 0487886 offenbart ein Verfahren zur Umsetzung einer Harnstoffwasserlösung durch Hydrolyse in Ammoniak und Kohlendioxid.

Aus der EP 0615777 B1 ist demgegenüber ein Verfahren bekannt, bei dem feste Harnstoffpartikel in Ammoniak umgewandelt werden, der dann im Rahmen der Abgasnachbehandlung zur Stickoxidreduzierung herangezogen wird. Zur Bereitstellung der festen Harnstoffpartikel sind ein Vorratsbehälter für diese und eine spezielle Dosiereinrichtung vorgesehen. Dabei fördert eine motorbetriebene Schnecke die eingeleiteten Harnstoffpartikel in eine mit Druckluft beaufschlagte Leitung, in der sie mitgerissen und einem Hydrolysekatalysator zugeführt werden. Nachteilig ist bei dieser bekannten Lösung die schlechte Dosierbarkeit der Menge der Harnstoffpartikel und der hohe Verbrauch an Druckluft.

Bei einer ähnlichen, aus der DE 10252734 A1 bekannten Lösung werden feste Harnstoffprills am Ende einer Förderstrecke, in der sie durch eine motorisch angetriebene Schnecke zu einer Zerkleinerungseinrichtung bewegt werden, durch rotierende Flügel bzw. Messer zerkleinert. Diese Flügel bzw. Messer sind gleichzeitig Teil eines Gebläses und erzeugen in dessen Gehäuse einen Luftstrom, mit dem die zerkleinerten Harnstoffpartikel über ein Rohr in eine Abgasleitung gefördert werden.

Obschon bei dieser Lösung keine eigenständige Druckluftquelle notwendig ist, kann sie nicht voll befriedigen, denn sie lässt nur eine relativ grobe Dosierung der Harnstoffprills zu.

Es ist demgegenüber Aufgabe der Erfindung, eine Zuführvorrichtung für feste Harnstoffgranulatkörner zu schaffen, bei der auf eine druckluftgestützte Transportierung der Harnstoffgranulatkörner verzichtet werden kann und die eine an den Ammoniakbedarf anpassbare Dosierung der Harnstoffgranulatkörner ermöglicht.

Diese Aufgabe ist erfindungsgemäß durch eine Zuführvorrichtung mit den im Anspruch 1 angegebenen Merkmalen gelöst.

Vorteilhafte Ausgestaltungen und Weiterbildungen der Erfindung sind in den abhängigen Ansprüchen gekennzeichnet.

Kern der erfindungsgemäßen Zuführvorrichtung ist eine in deren Gehäuse angeordnete, angetriebene rotierende Scheibe mit mindestens einem spiralförmig ausgebildeten Beschleunigungskanal, mit dem die einzeln eingeleiteten Harnstoffgranulatkörner auf eine einstellbar hohe Geschwindigkeit beschleunigbar und solchermaßen beschleunigt dem Ammoniakgenerator zuführbar sind.

Aufgrund dieser mechanischen Beschleunigung der Harnstoffgranulatkörner ist keine eigenständige Druckluftquelle wie in einigen Fällen des Standes der Technik nötig. Außerdem lässt die erfindungsgemäße Zuführvorrichtung eine sehr exakte anzahl- oder mengenmäßige Dosierung von Harnstoffgranulatkörner zu, was regelungs- und steuerungstechnisch eine genaue Anpassung der erforderlichen Harnstoffmenge an die zur Abgasreinigung notwendige Ammoniakmenge ermöglicht.

Das Harnstoffgranulat besteht vorzugsweise aus kugelförmigen Körnern gleicher Größe. Alternativ hierzu können auch zylinderförmige Harnstoffpellets zur Anwendung kommen. Die Harnstoffgranulatkörner können eine Größe bzw. einen Durchmesser von einigen Zehntel Millimetern bis mehreren Millimetern, vorzugsweise 1,5-3 mm haben und mit einer Dichte von beispielsweise 1,33 g/ml vorkonfektioniert sein.

Abhängig von der ihnen aufgeprägten Geschwindigkeit und der Größe der Harnstoffgranulatkörner können diese im Ammoniakgenerator beim Auftreffen auf ein Gitter oder eine Prallfläche oder einen Prallkörper mit unterschiedlichen Flächenwinkeln mehr oder weniger stark in Einzelteile zertrümmert werden. Diesel Harnstoff-Trümmerpartikel weisen im Vergleich zu den in den Ammoniakgenerator eingeschossenen Harnstoffgranulatkörnern in Summe eine wesentlich größere Oberfläche auf und bilden eine Harnstoffpartikelwolke mit günstiger Verteilung eingangs des Hydrolysekatalysators, sodass in letzterem die Umsetzung in Ammoniak optimal und auch bei reduzierten Temperaturen von ca. 150°C-200°C ablaufen kann. Die festen Harnstoffgranulatkörner können mittels der erfindungsgemäßen Zuführvorrichtung so beschleunigt werden, dass sie beim Einschießen in den Ammoniakgenerator eine Geschwindigkeit von vorzugsweise 30-100 m/s aufweisen. Die Rotationsgeschwindigkeit der Scheibe der erfindungsgemäßen Zuführvorrichtung kann z. B. 16.000 Umdrehungen pro Minute betragen. Die Menge der zugeführten Harnstoffgranulatkörner hängt vom NOₓ-Gehalt des zu reinigenden Abgasstromes ab. So können beispielsweise 100 Harnstoffgranulatkörner pro Sekunde in den Ammoniakgenerator eingeschossen werden. Durch den hohen Förderfrequenzbereich von 20 bis 100 Hertz ist eine optimal einfache Anpassung der Mengenströme an die jeweilige Dosieraufgabe (z. B. in einem Personenkraftwagen oder Nutzfahrzeug) bei vorgegebener Harnstoffgranulatkorngröße möglich.

Durch die Art der Krümmung des wenigstens einen Beschleunigungskanals wird zusätzlich zur Drehzahl der Scheibe die Geschwindigkeit der Harnstoffgranulatkörner beeinflusst. Der wenigstens eine Beschleunigungskanal ist hierzu an seiner Beschleunigungsseite durch eine Wand begrenzt, die einen aus mehreren Kreisradien und/oder einer logarithmischen Kurve und/oder einer Kurve mit durchgehend positiver Steigung gebildeten Verlauf hat.

Vorzugsweise beginnt der mindestens eine an der Oberseite der Scheibe gegebene Beschleunigungskanal im Bereich der Rotationsachse der Scheibe, ist bis zu deren umfänglichem Rand herausgeführt und verläuft dort zumindest annähernd tangential in Bezug auf diesen. Somit wird die gesamte Scheibenfläche optimal ausgenutzt und ein möglichst langer Beschleunigungskanal gebildet, mit dem die Harnstoffgranulatkörner schockfrei von annähernd Null auf eine Maximalgeschwindigkeit beschleunigbar sind. Im Gehäuse der Zuführvorrichtung ist an die rotierende Scheibe in Höhe des mindestens einen an dieser gegebenen Beschleunigungskanals ein zur Rotationsachse koaxialer Ringkanal angeordnet, der einen Teilabschnitt des Auslasskanals bildet und in den die beschleunigten Harnstoffgranulatkörner über eine Einlassöffnung einleitbar sind.

Durch den randseitig tangentialen Auslauf des wenigstens einen Beschleunigungskanals können die Harnstoffgranulatkörner mit maximaler Geschwindigkeit ohne Energieverluste von der Scheibe in die sie umgebende Nut eingeleitet und aus dieser über eine, einen weiteren Abschnitt des Auslasskanals bildende, tangential abzweigende Bohrung in das sich daran anschließende Rohr eingeleitet und über dieses in den Ammoniakgenerator eingeschossen werden.

Der Zuführvorrichtung ist in bevorzugter Weise eine Dosiereinrichtung zugeordnet, mit der die Harnstoffgranulatkörner aus dem Vorratsbehälter dosiert in das Gehäuse der Zuführvorrichtung einleitbar sind. Der Vorratsbehälter ist vorzugsweise oberhalb des Gehäuses und der rotierenden Scheibe angeordnet und weist in seinem unteren Bereich wenigstens eine schräge, zu einer bodenseitigen Auslassöffnung hinführende Fläche auf. Letzteres stellt sicher, dass die Harnstoffgranulatkörner ohne zusätzliche Fördermittel und -maßnahmen allein durch die Schwerkraft aus dem Vorratsbehälter ausgeleitet werden.

Die Dosiereinrichtung ist zwischen dem Vorratsbehälter für die Harnstoffgranulatkörner und dem Gehäuse der Zuführvorrichtung angeordnet. Der Einlass der Dosiereinrichtung ist mit der Auslassöffnung des Vorratsbehälters und der Auslass der Dosiereinrichtung ist mit dem Einlass der Zuführvorrichtung verbunden.

Die bodenseitige Auslassöffnung im Vorratsbehälter kann hinsichtlich ihrer Form und Größe entweder auf einen Einzelauslass der Harnstoffgranulatkörner oder einen gleichzeitigen Auslass mehrerer Harnstoffgranulatkörner ausgelegt sein. In letzterem Fall kann die Auslassöffnung durch einen länglichen Auslassschacht gebildet sein.

Der Einlass der Dosiereinrichtung ist wiederum an die Art und Größe der Auslassöffnung des Vorratsbehälters angepasst.

Die Dosiereinrichtung weist beispielsweise ein endlos umlaufendes Förderband mit einer Vielzahl von aneinander angrenzenden Vertiefungen auf, in denen jeweils ein Harnstoffgranulatkorn aufnehmbar ist. Das Förderband der Dosiereinrichtung ist über zwei voneinander beabstandete Zahnräder oder über ein Zahnrad in Verbindung mit einer Kulisse oder Umlenkeinrichtung oder über zwei voneinander beabstandete Reibräder oder Riemenscheiben geführt, wobei wenigstens eines der Zahnräder, Reibräder oder eine der Riemenscheiben durch einen Motor angetrieben ist. Dabei ist der Antrieb des Förderbandes der Dosiereinrichtung vorzugsweise unabhängig vom Antrieb der Scheibe der Zuführvorrichtung. Auf diese Weise kann der rotierenden Scheibe der Zuführvorrichtung durch die Dosiereinrichtung die Menge der Harnstoffgranulatkörner sehr präzise zudosiert werden. Dabei orientiert sich diese Zudosierung am Verunreinigungsgrad, insbesondere am Stickoxidgehalt des Abgases und der hierdurch bedingten Menge an Ammoniak für eine diesbezüglich katalytische Stickoxidreduzierung.

Im Detail ist es möglich, im Auslass der Dosiereinrichtung beispielsweise eine Umlenkeinrichtung vorzusehen, mit der die Harnstoffgranulatkörner ausgangs der Dosiereinrichtung in Richtung des Einlasses der Zuführvorrichtung und deren rotierender Scheibe hin umlenkbar sind. An den Auslass der Dosiervorrichtung schließt sich dann nach der Umlenkvorrichtung der Einlasskanal der Zuführvorrichtung an, der im Deckel von deren Gehäuse über der rotierenden Scheibe benachbart zu deren Rotationsachse ausgebildet ist.

In bevorzugter Weise ist die Zuführvorrichtung mittels eines Sperrventils gegenüber Gasen, Schmutz, Feuchtigkeit, festen Abgasrückständen etc. gasdicht absperrbar, der bzw. die über das Rohr vom Ammoniakgenerator oder der Abgasleitung her zu ihr vordringen könnten.

Nachfolgend ist die erfindungsgemäße Vorrichtung anhand der Zeichnung noch näher erläutert. In der Zeichnung zeigen:
- Fig. 1: schematisch den Abgasstrang eines Dieselmotors mit Abgasnachbehandlungsvorrichtungen und einer Art der Zuordnung der erfindungsgemäßen Vorrichtung,
- Fig. 2: im Schnitt eine Ausführungsform der erfindungsgemäßen Zuführvorrichtung mit zugeordnetem Vorratsbehälter für die Harnstoffgranulatkörner und zugeordneter Dosiervorrichtung,
- Fig. 3: eine perspektivische Ansicht auf ein Ausführungsbeispiel der erfindungsgemäßen Zuführvorrichtung bei offenem Gehäuse auf die rotierende Scheibe.

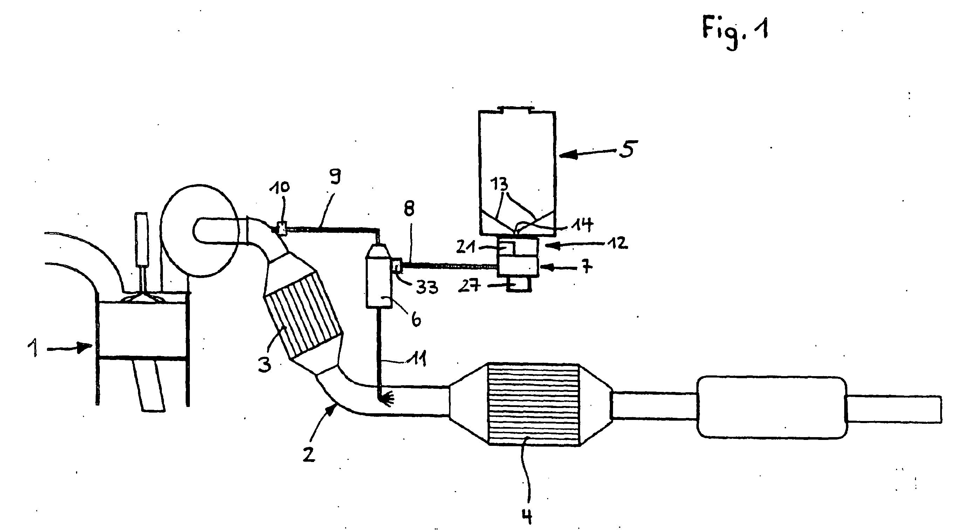

Fig. 1 zeigt einen Dieselmotor 1, dessen Abgase über einen Abgasstrang 2 mit integrierten Abgasnachbehandlungsvorrichtungen, hier einem Voroxidationskatalysator 3 zur NO₂-Anreicherung des Abgases und einem SCR-Katalysator 4 zur selektiven katalytischen Reduktion von NOₓ, gereinigt an die Atmosphäre abgeführt werden. Anstelle des Dieselmotors 1 kann der Abgasproduzent auch ein Brenner oder eine Gasturbine sein. Um die NOₓ-Reduktion im SCR-Katalysator herbeizuführen ist es notwendig, dem Abgasstrom vor dem Eintritt in den SCR-Katalysator 4 das Reduktionsmittel Ammoniak beizumischen. Dieser ist innerhalb oder außerhalb des Abgasstranges 2 zu erzeugen, wobei als Ausgangsbasis entweder eine Harnstoffwasserlösung oder fester Harnstoff zur Anwendung kommen kann.

Im vorliegenden Fall interessiert nur der feste Harnstoff, der in Form vorkonfektionierter kugelförmiger oder zylindrischer Granulatkörner in einem nachfüllbaren Vorratsbehälter 5 bevorratbar und aus diesem für die Ammoniakerzeugung abgebbar ist. Zur Ammoniakerzeugung ist ein Ammoniakgenerator 6 vorgesehen, der außerhalb (wie in Fig. 1 dargestellt) oder innerhalb des Abgasstrangs 2 angeordnet sein kann und die Harnstoffgranulatkörner mittels der erfindungsgemäßen Zuführvorrichtung 7 über ein Rohr 8 zugeführt bekommt. Bei der thermischen Umsetzung des Harnstoffs entstehen Ammoniak und Isocyansäure. Letztere wird anschließend innerhalb des Ammoniakgenerators 6 in Verbindung mit Wasserdampf durch katalytische Hydrolyse ebenfalls in NH₃ und CO₂ umgewandelt. Als Wasserdampfquelle ist im Beispiel von Fig. 1 ein Abgasteilstrom herangezogen, der über eine vom Abgasstrang 2 abgehende Bypassleitung 9 durch ein Regelorgan 10 in seiner Menge geregelt in den Ammoniakgenerator 6 einspeisbar ist. Das nach dem Umwandlungsprozess am Ausgang des Ammoniakgenerators 6 gegebene, Ammoniak enthaltende Gasgemisch wird strömungsmäßig vor dem SCR-Katalysator 4 in den Abgasstrom eingespeist, im dargestellten Beispiel gemäß Fig. 1 über eine Speiseleitung 11.

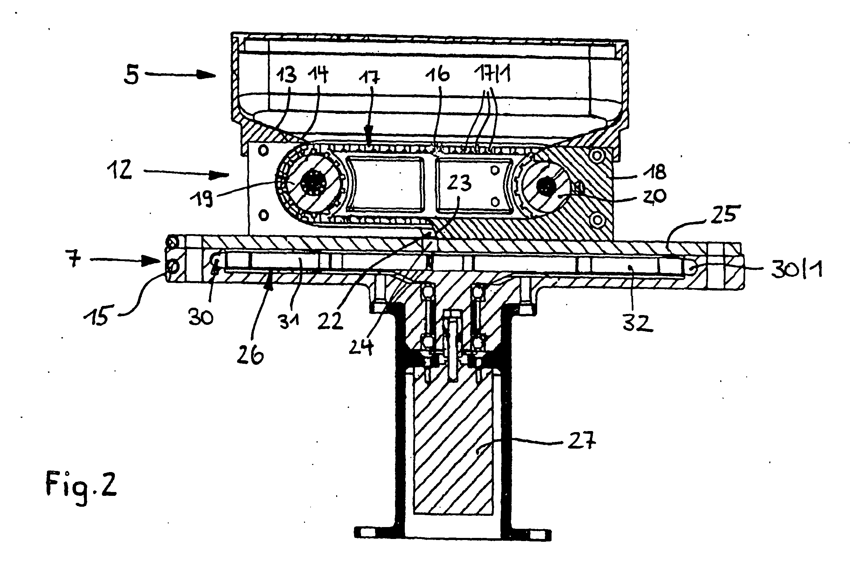

Fig. 2 zeigt ein Ausführungsbeispiel der in Fig. 1 schematisch angeordneten Zuführvorrichtung 7 in einer beispielhaften Zuordnung zum Vorratsbehälter 5 für die Harnstoffgranulatkörner und zu einer Dosiereinrichtung 12.

Der Vorratsbehälter 5 weist in seinem unteren Bereich schräge Flächen oder einen Trichter 13 auf, die bzw. der zu einer bodenseitigen Auslassöffnung 14 hinführt. Deren Form und Größe kann entweder auf einen Einzelauslass jeweils eines Harnstoffgranulatkorns oder auf einen gleichzeitigen Auslass mehrerer Harnstoffgranulatkörner ausgelegt und in letzterem Fall beispielsweise durch einen länglichen Auslassschacht gebildet sein.

Im dargestellten Beispiel sind der Vorratsbehälter 5 oberhalb der Zuführvorrichtung 7 und die Dosiereinrichtung 12 zwischen dem Vorratsbehälter 5 und dem Gehäuse 15 der Zuführvorrichtung angeordnet. Der Einlass 16 der Dosiereinrichtung 12 ist mit der Auslassöffnung 14 des Vorratsbehälters 5 verbunden und an deren Art und Größe angepasst. Unterhalb des Einlasses 16 der Dosiereinrichtung 12 wird ein endlos umlaufendes Förderband 17 vorbeibewegt, das eine Vielzahl von aneinander angrenzenden Vertiefungen 17/1 aufweist, in denen jeweils ein Harnstoffgranulatkorn aufnehmbar ist. Das endlose Förderband 17 kann im Gehäuse 18 der Dosiereinrichtung 12 über zwei dort voneinander beabstandet gelagerte Zahnräder 19, 20 oder über ein Zahnrad in Verbindung mit einer Kulisse oder Umlenkeinrichtung oder über zwei Reibräder oder Riemenscheiben geführt sein. Dabei ist mindestens eine(s) der Zahnräder 19, 20, Reibräder oder Riemenscheiben durch einen Motor 21 angetrieben.

Die über die schrägen Flächen bzw. den Trichter 13 zur Auslassöffnung 14 im Vorratsbehälter 5 hinrutschenden Harnstoffgranulatkörner fallen über die Auslassöffnung 14 und den Einlass 16 der Dosiereinrichtung in die Vertiefungen 18 des Förderbandes 17 und werden mittels diesen zu einem Auslass 22 transportiert. Dieser Auslass 22 der Dosiereinrichtung 12 weist bevorzugt eine gekrümmte Umlenkvorrichtung 23 auf, mit der die Harnstoffgranulatkörner weitestgehend schockfrei aus der Dosiereinrichtung 12 ausgeleitet und über einen anschließenden Einlasskanal 24 der Zuführvorrichtung 7 in diese einspeisbar sind. Dieser Einlasskanal 24 ist im Deckel 25 des Gehäuses 15 der Zuführvorrichtung über einer darin rotierend gelagerten Scheibe 26 benachbart zu deren Rotationsachse ausgebildet.

Die durch einen Motor 27 angetriebene Scheibe 26 weist erfindungsgemäß wenigstens einen spiralförmig ausgebildeten Beschleunigungskanal 28, 29 auf. Darüber hinaus weist die Zuführvorrichtung 7 einen nach außen führenden Auslasskanal 30 auf, an den sich das zum Ammoniakgenerator 6 hinführende Rohr 8 anschließt.

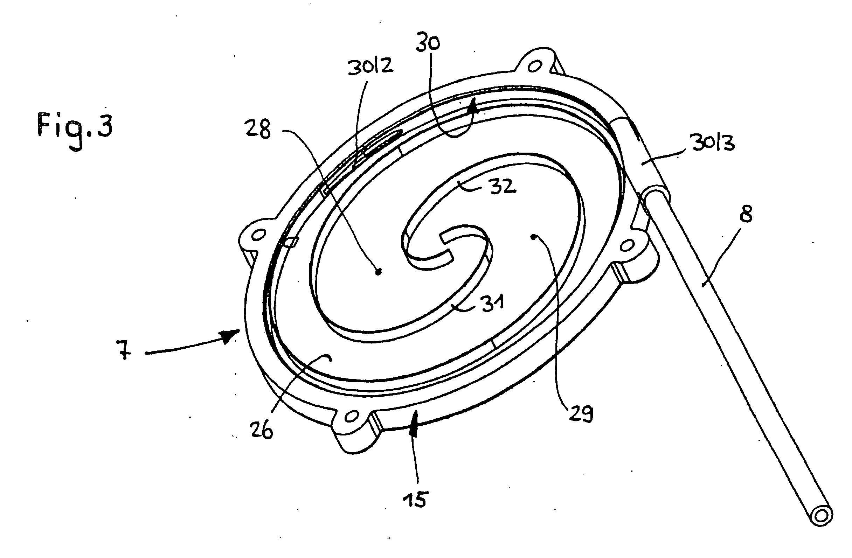

Wie gut aus Fig. 3 ersichtlich, weist das dargestellte Ausführungsbeispiel der Zuführvorrichtung 7 eine Scheibe 26 mit zwei an ihrer Oberseite angeordneten Beschleunigungskanälen 28, 29 auf. Jeder derselben ist an seiner Beschleunigungsseite durch eine Wand 31, 32 begrenzt, die einen aus mehreren Kreisradien und/oder einer logarithmischen Kurve und/oder einer Kurve mit durchgehend positiver Steigung gebildeten Verlauf hat. Dabei beginnt der bzw. jeder Beschleunigungskanal 28, 29 im Bereich der Rotationsachse der Scheibe 26 und ist bis zum umfänglichen Rand der Scheibe 26 herausgeführt und verläuft dort zumindest annähernd tangential in Bezug auf diesen. Durch die Rotation der Scheibe 26 mit den spiralförmig ausgebildeten Beschleunigungskanälen 28, 29 wird jedes zugeführte Harnstoffgranulatkorn von der Mitte der Scheibe 26 bis zu deren Rand auf eine maximale, sehr hohe Geschwindigkeit beschleunigt.

Im Gehäuse 15 der Zuführvorrichtung ist um die Scheibe 26 in Höhe von deren Beschleunigungskanälen 28, 29 ein zur Rotationsachse der Scheibe koaxialer Ringkanal 30/1 angeordnet, der einen Teil des Auslasskanals 30 bildet und in den die beschleunigten Harnstoffgranulatkörner über eine Einlassöffnung 30/2 einleitbar sind. Von diesem Ringkanal 30/1 zweigt als weiterer Abschnitt des Auslasskanals 30 eine ebenfalls in Gehäuse 15 ausgebildete Bohrung 30/3 tangential ab, an der sich das zum Ammoniakgenerator 6 führende Rohr 8 anschließt. Durch diese tangentiale Anordnung der Bohrung 30/3 und deren geradlinige Fortführung durch das Rohr 8 können daher die beschleunigten Harnstoffgranulatkörner aus dem Ringkanal 30/1 mit maximaler Geschwindigkeit in Richtung Ammoniakgenerator 6 befördert werden.

Der Motor 27, von dem die Scheibe 26 angetrieben ist, wird separat und unabhängig zu dem das Förderband 17 der Dosiereinrichtung 12 antreibenden Motors 21 betrieben.

Durch diesen separaten Antrieb des Förderbandes 17 und der Scheibe 26 können die Geschwindigkeit, mit der die Harnstoffgranulatkörner in den Ammoniakgenerator 6 eingeschossen werden, und die Menge der einzuschießenden Harnstoffgranulatkörner unabhängig voneinander eingestellt und geregelt werden.

Das Rohr 8 ist vorzugsweise mit einem Absperrventil 33 ausgerüstet. Dieses verhindert im Absperrzustand, dass aus dem Ammoniakgenerator 6 Wärme, feste Abgasbestandteile, Feuchtigkeit und dergleichen in das Rohr 8 und über dieses zur Zuführvorrichtung 7 eindringen können. Außerdem verhindert die Absperrvorrichtung 33 die Bildung von Kondenswasser im Rohr 8 und der Zuführvorrichtung 7.

### Bezugszeichenliste

- 1: Dieselmotor
- 2: Abgasstrang
- 3: Voroxidationskatalysator
- 4: SCR-Katalysator
- 5: Vorratsbehälter
- 6: Ammoniakgenerator
- 7: Zuführvorrichtung
- 8: Rohr zw. 7 und 6
- 9: Bypassleitung
- 10: Regelorgan
- 11: Speiseleitung
- 12: Dosiereinrichtung
- 13: Flächen/Trichter in 5
- 14: Auslassöffnung von 5
- 15: Gehäuse von 7
- 16: Einlass von 12
- 17: Förderband in 12
- 18: Gehäuse von 12
- 19: Zahnrad in 12
- 20: Zahnrad in 12
- 21: Motor von 12
- 22: Auslass von 12
- 23: Umlenkvorrichtung in 22
- 24: Einlasskanal
- 25: Deckel an 15
- 26: Scheibe in 7
- 27: Motor von 7
- 28: Beschleunigungskanal an 26
- 29: Beschleunigungskanal an 26
- 30: Auslasskanal
- 30/1: Ringkanal
- 30/2: Einlassöffnung für 30/1
- 30/3: Bohrung von 30
- 31: Wand an 28
- 32: Wand an 29
- 33: Absperrventil

## Patentansprüche

1. Zuführvorrichtung (7) zum Zuführen von festen Harnstoffgranulatkörnern in einen innerhalb oder außerhalb einer Abgasleitung angeordneten Ammoniakgenerator (6) zur Erzeugung von Ammoniak, der bei der katalytischen Reinigung des Abgases einer Brennkraftmaschine, Gasturbine oder eines Brenners die NOₓ-Reduktion bewirkt, wobei die Harnstoffgranulatkörner in einem Vorratsbehälter (5) bevorratet sind, **dadurch gekennzeichnet, dass** die Zuführvorrichtung (7) ein Gehäuse (15) mit einem Einlass (24) für die Einspeisung der Harnstoffgranulatkörner und intern eine motorisch angetriebene rotierende Scheibe (26) mit mindestens einem spiralförmig ausgebildeten Beschleunigungskanal (28, 29) sowie einen nach außen führenden Auslasskanal (30) aufweist, an den sich ein zum Ammoniakgenerator (6) hinführendes Rohr (8) anschließt.

2. Zuführvorrichtung nach Anspruch 1, **dadurch gekennzeichnet, dass** der mindestens eine spiralförmige Beschleunigungskanal (28, 29) an der Oberseite der Scheibe (26) angeordnet und an seiner Beschleunigungsseite durch eine Wand (31, 32) begrenzt ist, die einen aus mehreren Kreisradien und/oder einer logarithmischen Kurve und/oder einer Kurve mit durchgehend positiver Steigung gebildeten Verlauf hat.

3. Zuführvorrichtung nach einem der Ansprüche 1 und 2, **dadurch gekennzeichnet, dass** der mindestens eine Beschleunigungskanal (28, 29) im Bereich der Rotationsachse der Scheibe (26) beginnt, bis zum umfänglichen Rand der Scheibe (26) herausgeführt ist und dort zumindest annähernd tangential in Bezug auf diesen verläuft.

4. Zuführvorrichtung nach einem der Ansprüche 1 bis 3, **dadurch gekennzeichnet, dass** im Gehäuse (15) um die Scheibe (26) in Höhe des mindestens einen an ihr gegebenen Beschleunigungskanals (28, 29) ein zur Rotationsachse koaxialer Ringkanal (30) angeordnet ist, der einen Teilabschnitt des Auslasskanals (30) bildet und in den die beschleunigten Harnstoffgranulatkörner über eine Einlassöffnung (30/2) einleitbar sind.

5. Zuführvorrichtung nach Anspruch 4, **dadurch gekennzeichnet, dass** von dem im Gehäuse (15) um die Scheibe (26) angeordneten Ringkanal (30/1) als weiterer Abschnitt des Auslasskanals (30) eine Bohrung (30/3) tangential abzweigt, an der sich das zum Ammoniakgenerator (6) hinführende Rohr (8) anschließt.

6. Zuführvorrichtung nach Anspruch 1, **dadurch gekennzeichnet, dass** ihr eine Dosiereinrichtung (12) zugeordnet ist, mit der die Harnstoffgranulatkörner aus dem Vorratsbehälter (5) dosiert in das Gehäuse (15) der Zuführvorrichtung (7) einleitbar sind.

7. Zuführvorrichtung nach einem der Ansprüche 1 bis 6, **dadurch gekennzeichnet, dass** der über ihr angeordnete Vorratsbehälter (5) für die Harnstoffgranulatkörner in seinem unteren Bereich einen Trichter oder wenigstens eine schräge, zu einer bodenseitigen Auslassöffnung (14) hinführende Fläche (13) aufweist.

8. Zuführvorrichtung nach den Ansprüchen 6 und 7, **dadurch gekennzeichnet, dass** die Dosiereinrichtung (12) zwischen dem Vorratsbehälter (5) und dem Gehäuse (15) der Zuführvorrichtung (7) angeordnet ist, dass der Einlass (16) der Dosiereinrichtung (12) mit der Auslassöffnung (14) des Vorratsbehälters (5) verbunden ist, und dass der Auslass (22) der Dosiervorrichtung (12) mit dem Einlass (24) der Zuführvorrichtung (7) verbunden ist.

9. Zuführvorrichtung nach Anspruch 8, **dadurch gekennzeichnet, dass** die bodenseitige Auslassöffnung (14) im Vorratsbehälter (5) hinsichtlich ihrer Form und Größe auf einen Einzelauslass der Harnstoffgranulatkörner ausgelegt ist.

10. Zuführvorrichtung nach Anspruch 8, **dadurch gekennzeichnet, dass** die bodenseitige Auslassöffnung (14) im Vorratsbehälter (5) hinsichtlich ihrer Form und Größe auf einen gleichzeitigen Auslass mehrerer Harnstoffgranulatkörner ausgelegt und vorzugsweise durch einen länglichen Auslassschacht gebildet ist.

11. Zuführvorrichtung nach einem der Ansprüche 9 und 10, **dadurch gekennzeichnet, dass** der Einlass (16) der Dosiereinrichtung (12) an die Art und Größe der Auslassöffnung (14) des Vorratsbehälters (5) angepasst ist.

12. Zuführvorrichtung nach einem der Ansprüche 6, 8 und 11, **dadurch gekennzeichnet, dass** die Dosiereinrichtung (12) ein endlos umlaufendes und am Einlass (16) vorbeilaufendes Förderband (17) mit einer Vielzahl von aneinander angrenzenden Vertiefungen (17/1) aufweist, in denen jeweils ein Harnstoffgranulatkorn aufnehmbar ist.

13. Zuführvorrichtung nach Anspruch 12, **dadurch gekennzeichnet, dass** das Förderband (17) der Dosiereinrichtung (12) über zwei voneinander beabstandete Zahnräder (19, 20) oder über ein Zahnrad in Verbindung mit einer Kulisse oder Umlenkeinrichtung oder über zwei Reibräder oder Riemenscheiben geführt ist, und dass mindestens eine(s) der Zahnräder (19, 20), Reibräder oder Riemenscheiben durch einen Motor (21) angetrieben ist.

14. Zuführvorrichtung nach Anspruch 13, **dadurch gekennzeichnet, dass** der Antrieb des Förderbandes (17) der Dosiereinrichtung (12) unabhängig vom Antrieb der Scheibe (16) der Zuführvorrichtung (7) ist.

15. Zuführvorrichtung nach einem der Ansprüche 8, 12 und 13, **dadurch gekennzeichnet, dass** der Auslass (22) der Dosiervorrichtung (12) eine Umlenkeinrichtung (23) aufweist, mit der die Harnstoffgranulatkörner ausgangs der Dosiervorrichtung (12) in Richtung des Einlasses (24) der Zuführvorrichtung (7) und zur rotierenden Scheibe (26) hin umlenkbar sind.

16. Zuführvorrichtung nach Anspruch 15, **dadurch gekennzeichnet, dass** der sich an den Auslass (22) der Dosiervorrichtung (12) nach der Umlenkvorrichtung (23) anschließende Einlasskanal (24) der Zuführvorrichtung (7) im Deckel (25) von deren Gehäuse (15) über der rotierenden Scheibe (26) benachbart zu deren Rotationsachse ausgebildet ist.

17. Zuführvorrichtung nach Anspruch 1, **dadurch gekennzeichnet, dass** das Rohr (8) mit einem Absperrventil (33) ausgestattet ist, welches verhindert, dass aus dem Ammoniakgenerator (6) Wärme, feste Abgasbestandteile, Feuchtigkeit und dergl. in das Rohr (8) und über dieses zur Zuführvorrichtung (7) vordringen können.

## Claims

1. A feed apparatus (7) for feeding solid urea granules into an ammonia generator (6) arranged inside or outside an exhaust-gas line in order to produce ammonia, which ammonia generator (6), during the catalytic cleaning of the exhaust gas of an internal-combustion engine, gas turbine or burner, carries out the NOₓ reduction, wherein the urea granules are stored in a storage container (5), **characterized in that** the feed apparatus (7) has a housing (15) with an inlet (24) for feeding in the urea granules and, on the inside, a rotating disc (26) driven by a motor and having at least one acceleration duct (28, 29) in the shape of a spiral and an outlet duct (30) which leads to the outside and to which a pipe (8) leading to the ammonia generator (6) is connected.

2. A feed apparatus according to Claim 1, **characterized in that** the at least one spiral acceleration duct (28, 29) is arranged on the upper side of the disc (26) and is bounded on its acceleration side by a wall (31, 32) which has a shape formed from a plurality of radii of a circle and/or a logarithmic curve and/or a curve with a continuously positive gradient.

3. A feed apparatus according to one of Claims 1 and 2, **characterized in that** the at least one acceleration duct (28, 29) starts in the region of the axis of rotation of the disc (26), continues as far as the peripheral edge of the disc (26) and there extends at least substantially tangentially with respect to the said peripheral edge.

4. A feed apparatus according to any one of Claims 1 to 3, **characterized in that** an annular duct (30), which is coaxial with the axis of rotation and which forms a portion of the outlet duct (30) and into which the accelerated urea granules are capable of being introduced by way of an inlet opening (30/2), is provided in the housing (15) around the disc (26) at the level of the at least one acceleration duct (28, 29) provided on it.

5. A feed apparatus according to Claim 4, **characterized in that** a bore (30/3), to which the pipe (8) leading to the ammonia generator (6) is connected, branches tangentially off, as a further portion of the outlet duct (30), from the annular duct (30/1) provided in the housing (15) around the disc (26).

6. A feed apparatus according to Claim 1, **characterized in that** it has associated with it a metering device (12) by which the urea granules are capable of being introduced from the storage container (5) in a metered manner into the housing (15) of the feed apparatus (7).

7. A feed apparatus according to any one of Claims 1 to 6, **characterized in that** the lower region of the storage container (5) arranged above it for the urea granules has a funnel or at least one oblique face (13) leading to an outlet (14) opening at the bottom.

8. A feed apparatus according to Claims 6 and 7, **characterized in that** the metering device (12) is arranged between the storage container (5) and the housing (15) of the feed apparatus (7), the inlet (16) of the metering device (12) is connected to the outlet opening (14) of the storage container (5), and the outlet (22) of the metering device (12) is connected to the inlet (24) of the feed apparatus (7).

9. A feed apparatus according to Claim 8, **characterized in that** with respect to its shape and size the outlet opening (14) at the bottom in the storage container (5) is designed for the individual discharge of the urea granules.

10. A feed apparatus according to Claim 8, **characterized in that** with respect to its shape and size the outlet opening (14) at the bottom in the storage container (5) is designed for the simultaneous discharge of a plurality of urea granules and is preferably formed by an elongate outlet chute.

11. A feed apparatus according to one of Claims 9 and 10, **characterized in that** the inlet (16) of the metering device (12) is adapted to the nature and size of the outlet opening (14) of the storage container (5).

12. A feed apparatus according to any one of Claims 6, 8 and 11, **characterized in that** the metering device (12) comprises an endlessly circulating conveyor belt (17) running past the inlet (16) and having a plurality of depressions (17/1) adjacent to one another in which one urea granule is capable of being received in each case.

13. A feed apparatus according to Claim 12, **characterized in that** the conveyor belt (17) of the metering device (12) is guided over two toothed wheels (19, 20) arranged at a distance from each other or over one toothed wheel in conjunction with a slide block or a deflecting device or over two friction wheels or belt pulleys, and at least one of the toothed wheels (19, 20), friction wheels or belt pulleys is driven by a motor (21).

14. A feed apparatus according to Claim 13, **characterized in that** the drive of the conveyor belt (17) of the metering device (12) is independent of the drive of the disc (16) of the feed apparatus (7).

15. A feed apparatus according to any one of Claims 8, 12 and 13, **characterized in that** the outlet (22) of the metering device (12) has a deflecting device (23) by which the urea granules are capable of being deflected at the outlet of the metering device (12) in the direction of the inlet (24) of the feed apparatus (7) and towards the rotating disc (26).

16. A feed apparatus according to Claim 15, **characterized in that** the inlet duct (24) of the feed apparatus (7) attached to the outlet (22) of the metering device (12) downstream of the deflecting device (23) is formed in the cover (25) of the housing (15) of the said feed apparatus (7) above the rotating disc (26) and adjacent to the axis of rotation of the latter.

17. A feed apparatus according to Claim 1, **characterized in that** the pipe (8) is provided with a shut-off valve (33) which prevents heat, solid exhaust-gas constituents, moisture and the like from being able to penetrate from the ammonia generator (6) into the pipe (8) and by way of the latter to the feed apparatus (7).

## Revendications

1. Dispositif d'alimentation (7) de granulés d'urée solides dans un générateur d'ammoniac (6) disposé à l'intérieur ou à l'extérieur d'une conduite d'échappement pour générer de l'ammoniac qui entraîne la réduction des NOₓ lors de la dépollution catalytique des gaz d'échappement d'un moteur à combustion interne, d'une turbine de gaz ou d'un brûleur, les granulés d'urée étant stockées dans un réservoir (5),
**caractérisé en ce que**
le dispositif d'alimentation (7) présente un boîtier (15) avec une entrée (24) pour l'alimentation des granulés d'urée et à l'intérieur un disque rotatif (26) entraîné par un moteur avec au moins un canal d'accélération (28, 29) en forme de spirale ainsi qu'un canal d'évacuation (30) conduisant à l'extérieur et auquel se raccorde un tuyau (8) conduisant au générateur d'ammoniac (6).

2. Dispositif d'alimentation selon la revendication 1,
**caractérisé en ce qu'**
on dispose au moins un canal d'accélération (28, 29) en spirale sur la surface du disque (26) et on limite ce canal sur son côté d'accélération par une paroi (31, 32) qui a un tracé formé de plusieurs rayons de cercle et/ou d'une courbe logarithmique et/ou d'une courbe comportant une pente positive en continu.

3. Dispositif d'alimentation selon l'une quelconque des revendications 1 ou 2,
**caractérisé en ce qu'**
au moins un canal d'accélération (28, 29) commence dans la zone de l'axe de rotation du disque (26), sort au niveau du bord périphérique du disque (26) et s'y étend au moins approximativement à la tangente de ce dernier.

4. Dispositif d'alimentation selon l'une quelconque des revendications 1 à 3,
**caractérisé en ce qu'**
on dispose dans le boîtier (15) autour du disque (26) à hauteur de l'au moins un canal d'accélération (28, 29) placé sur ce disque un canal annulaire (30) coaxial à l'axe de rotation, formant un segment partiel du canal d'évacuation (30) et dans lequel il est possible d'introduire les granulés d'urée accélérées par un orifice d'entrée (30/2).

5. Dispositif d'alimentation selon la revendication 4,
**caractérisé en ce qu'**
un alésage (30/3) auquel se raccorde le tuyau (8) conduisant au générateur d'ammoniac (6) dévie du canal annulaire (30/ 1) disposé dans le boîtier (15) autour du disque (26) en tant qu'autre segment du canal d'évacuation (30).

6. Dispositif d'alimentation selon la revendication 1,
**caractérisé en ce qu'**
un dispositif de dosage (12) associé permet d'introduire les granulés d'urée sortant du réservoir (5) de manière dosée dans le boîtier (15) du dispositif d'alimentation (7).

7. Dispositif d'alimentation selon l'une quelconque des revendications 1 à 6,
**caractérisé en ce que**
le réservoir (5) disposé sur ce dispositif pour les granulés d'urée présente dans sa section inférieure une trémie ou au moins une surface (13) en biais conduisant à un orifice d'évacuation (14) côté fond.

8. Dispositif d'alimentation selon les revendications 6 et 7,
**caractérisé en ce que**
le dispositif de dosage (12) est entre le réservoir (5) et le boîtier (15) du dispositif d'alimentation (7), l'entrée (16) du dispositif de dosage (12) est reliée à l'orifice d'évacuation (14) du réservoir (5) et l'évacuation (22) du dispositif de dosage (12) est reliée à l'entrée (24) du dispositif d'alimentation (7).

9. Dispositif d'alimentation selon la revendication 8,
**caractérisé en ce que**
l'orifice d'évacuation (14) côté fond dans le réservoir (5) en termes de forme et de dimensions est conçu pour une évacuation individuelle des granulés d'urée.

10. Dispositif d'alimentation selon la revendication 8,
**caractérisé en ce que**
l'orifice d'évacuation (14) côté fond dans le réservoir (5) en termes de forme et de dimensions est conçu pour une évacuation simultanée de plusieurs granulés d'urée et un puits d'évacuation longitudinal forme de préférence celle-ci.

11. Dispositif d'alimentation selon l'une quelconque des revendications 9 et 10,
**caractérisé en ce que**
l'entrée (16) du dispositif de dosage (12) est adaptée au type et aux dimensions de l'orifice d'évacuation (14) du réservoir (5).

12. Dispositif d'alimentation selon l'une quelconque des revendications 6, 8 et 11,
**caractérisé en ce que**
le dispositif de dosage (12) présente une bande transporteuse (17) tournant sans fin et passant devant l'entrée (16) comportant un grand nombre de cavités (17/1) voisines les unes les autres et pouvant loger respectivement un granulé d'urée.

13. Dispositif d'alimentation selon la revendication 12,
**caractérisé en ce que**
la bande transporteuse (17) du dispositif de dosage (12) est guidée via deux engrenages (19, 20) espacés l'un de l'autre ou via un engrenage associé à une coulisse ou à un dispositif de renvoi ou via deux roues de friction ou poulies, et au moins l'un des engrenages (19, 20), des roues de friction ou des poulies est entraîné(e) par un moteur (21).

14. Dispositif d'alimentation selon la revendication 13,
**caractérisé en ce que**
l'entraînement de la bande transporteuse (17) du dispositif de dosage (12) ne dépend pas de l'entraînement du disque (16) du dispositif d'alimentation (7).

15. Dispositif d'alimentation selon l'une quelconque des revendications 8, 12 et 13,
**caractérisé en ce que**
l'évacuation (22) du dispositif de dosage (12) présente un dispositif de renvoi (23) permettant de renvoyer les granulés partant du dispositif de dosage (12) en direction de l'entrée (24) du dispositif d'alimentation (7) et vers le disque rotatif (26).

16. Dispositif d'alimentation selon la revendication 15,
**caractérisé en ce que**
on forme le canal d'entrée (24) du dispositif d'alimentation (7) raccordé à l'évacuation (22) du dispositif de dosage (12) en aval du dispositif de renvoi (23) dans le couvercle (25) par son boîtier (15) via un disque rotatif (26) à côté de son axe de rotation.

17. Dispositif d'alimentation selon la revendication 1,
**caractérisé en ce que**
le tuyau (8) est équipé d'une valve d'arrêt (33) qui empêche que de la chaleur, des résidus solides de gaz d'échappement, de l'humidité ou similaires sortant du générateur d'ammoniac (6) ne puisse pénétrer dans le tuyau (8) et vers le dispositif d'alimentation (7) via ce tuyau.
